# EUROPEAN PATENT APPLICATION

(11) **EP 1 965 383 A1**
(43) Date of publication of application: **03.09.2008**
(21) Application number: 07103431.8
(22) Date of filing: 02.03.2007
(51) Int. Cl.: G11B 7/26

(54) **Diffraction order measurement**

(71) Applicant: Singulus Mastering B.V., 5657 EN Eindhoven (NL)
(72) Inventor: Wijn, Josephus Marinus, 5657 EN Eindhoven (NL); Franse, Jelm, 5657 EN Eindhoven (NL)
(74) Representative: Vossius & Partner

(57) **Abstract**

The present invention relates to an integrated mastering system and a method for manufacturing master discs for optical media. The system according to the invention comprises means for recording information on a master disc including means for applying a material layer to a master disc, a laser beam recorder for illuminating the material layer in a desired pattern based on the information to be recorded, means for developing the material layer, means for determining the quality of the developed layer based on measurement of a light beam diffracted by the pattern recorded on the master disc, and means for controlling the means for recording on the basis of the quality of the master disc. According to the method of the present invention, the quality of the developed layer of a master disc is determined and the mastering process settings of a subsequent master disc are controlled.

## Description

The present invention relates to manufacturing of master discs for optical media and particularly to controlling the quality of the master discs produced.

Master discs for optical media are nowadays generally produced in integrated mastering systems. Integrated mastering systems include in a single housing, the equipment for cleaning the substrate, coating a photoresist layer to the substrate, recording the information in the photoresist using a laser beam recorder, developing the recorded master disc and applying a metal layer, and further comprise transport means for moving the substrate to be processed from one of these treating stations to the next one. The treating stations may be arranged along a line, as disclosed, for example, in EP-A-0 594 255, or in a circular way as described, for example, in WO 1997/39449.

Instead of using a photosensitive layer, such as a photoresist, mastering may also be performed by using a phase transition mastering process as disclosed, for example, in WO 2006/072895. In this case, a dielectric layer is applied on the substrate by sputtering. By applying laser pulses, a heat-induced phase transition is caused in regions of the dielectric layer where pits are to be formed. The regions of the dielectric layer which experienced the phase transition may then be removed by an etching process. Typically, a ZnS-SiOₓ layer is used as the layer sensitive to phase transitions.

Monitoring the quality of the master discs produced in an integrated mastering system is decisive for the quality of the discs produced with the master disc. US-A-4 469 424 describes a method and system for developing a photo-resist material used as a recording medium wherein the size of the pits formed during the developing process is precisely controlled and a deviation from one recording medium to another is reduced. To this end, a monitoring beam is applied on the recording medium during the developing process in order to monitor the advancement of the chemical reaction. The monitoring beam of a predetermined wavelength and at an angle of incidence greater or smaller than 90° is supplied on the sensitive layer covering the base being developed, and the intensity of a diffraction beam of the monitoring beam passing through the pits is detected. From the intensity of the diffraction beam, a diffraction intensity signal is produced and the supply of the developing solution is controlled in accordance with the diffraction intensity signal. JP-A-04-311 837 discloses a similar method using both the first and second diffracted orders.

An inspection system which measures all the physical parameters necessary to monitor, control and optimize the mastering system is available from various suppliers. This inspection system measures the average pitch or groove dimension of a master disc using a diffraction order measurement (DOM). This measurement is based on the fact that the information written on the master disc in the form of a regular pattern of grooves with a constant track pitch acts as a periodic grating which, when illuminated by a laser beam of a certain wavelength, splits the incident beam into a number of reflected or transmitted beams. The intensities of the first and second diffraction order beams depend on the groove dimension.

It is an object of the present invention to provide an improved integrated mastering system and a method for more efficiently producing master discs with a high quality.

This object is achieved with the features of the claims.

The integrated mastering system according to the present invention comprises means for determining the quality of the developed layer. This is done using a diffraction order measurement by directing a light beam to the developed layer and measuring the diffraction angle and/or the intensity of the light beam diffracted by the pattern recorded on the master disc. In an integrated mastering system, measurements from one station can be used for process optimization in other stations. In case of the present invention, the diffraction order measurement which is used as a measure for the quality of the developed layer, is used for optimizing recording of subsequent master discs by controlling, e.g., application of the material layer to the master disc or writing the information in the laser beam recorder.

Specifically, after development of the disc, the diffraction order measurement indicates if the recording process was successful and if the pits/bumps are homogeneously formed over the master disc. The two stations that strongly interact with the pit creation process are the means for applying a material layer and the laser beam recorder.

During recording, the intensity and the focus of the laser beam recorder is controlled in order to improve the quality of the master disc. Intensity control may be effectively performed by providing a diode, for example an EOE diode, which is illuminated by light being directed away from the principle light path, for example, using a beam splitter. In particular, in the constant linear velocity (CLV) mode, the intensity is unlikely to vary over the radius of the master disc since the linear velocity along the spiral to be recorded is constant and controlled by a servo system.

Controlling the focus is more difficult. Since, usually, the focus is controlled by measuring light reflected from the disc, erroneous focus offsets may occur when variations on the substrate are present. Therefore, controlling the focus can be greatly improved with the present invention by detecting focus offset variations using diffraction order measurements of a developed disc and accordingly control the laser beam recorder when subsequently recording another master disc. In order to further improve the determine the preferred focus setting, bands with a predetermined focus offset can be written in areas of the disc which are not used for recording information on the disc, that is, on the inside and outside of the disc away from VCI, program area and development band. From plots showing the intensity of a diffracted beam over the radius of the master disc which are produced using diffraction order measurements, focus offset deviations can automatically be detected and compensated. This detection and compensation enables stable focus and intensity behaviour over the complete disc and from disc to disc.

Variations in the structure of the developed layer may also arise from inhomogeneities of the material layer applied to the master disc. For example, when a photoresist is applied to the master disc by spin-coating, variations in the amount of material applied to the master disc or the rotation speed of the spin coater may influence the applied layer, e.g., by introducing variations in the thickness of the applied material layer. Depending on the diffraction order measurement, these parameters may be controlled during the step of applying the material layer.

The material layer may also be applied to the master disc using a sputtering unit. In particular, when mastering is performed by using a phase transition mastering process, the dielectric layer in which the phase transition is caused usually is sputtered to the master disc. The layer applied in a sputtering process may also be controlled depending on the quality determined in the diffraction order measurement. As described, for example, in EP-A-0 946 965, a sputtering unit may include a sputtering cathode which is arranged in a vacuum chamber and comprises pole shoes, a target and at least one magnet or ring magnet arranged concentrically with respect to the center axis of the sputtering cathode. A divided yoke is arranged axially symmetrically with respect to the center axis of the sputtering cathode. By using magnetic coils, which can, for example, be arranged under the target or at any other place, the magnetic field in the target space can be influence or varied purposefully, so that the plasma can be displaced radially from inside to outside. Using such a device, any variations determined by the diffraction order measurement may be compensated when sputtering the material layer of a subsequent master disc.

By determining the quality of the recording in an integrated mastering system continuously, the quality of the produced master discs can be improved and any drift of the system can be avoided.

The present invention will now be described in more detail with reference to the Figures, wherein
- Figure 1: schematically shows a unit for performing diffraction order measurement in an integrated mastering system according to the present invention;
- Figure 2: schematically shows a detail of the unit shown in Fig. 1; and
- Figure 3: shows examples for diffraction order measurement plots.

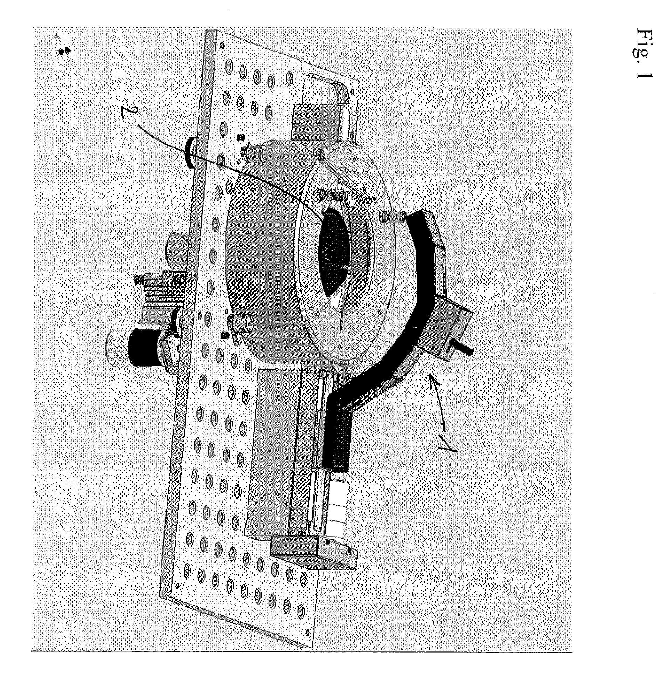

In Figure 1, a unit which is used for diffraction order measurement in an integrated mastering system according to the present invention is shown. In order to perform a diffraction order measurement, a laser beam to an area of the developed master disc in which information has been recorded. The beams which are diffracted by the track recorded to the master disc may be observed in transmission or reflection. In the unit shown in Figure 1, an arm 1 is provided above the master disc 2. The arm 1 includes a laser for directing a laser beam to the developed master disc 2 and one or more detectors for detecting the light reflected from the master disc 2 and diffracted by certain angles. The device shown in Figure 1 advantageously combines units adapted to perform different method steps in an integrated mastering system. The device may, e.g., be adapted to perform the cleaning step, in which the substrate on which the material layer is to be applied is cleaned, and/or the step of developing the master disc upon recording in the laser beam recorder.

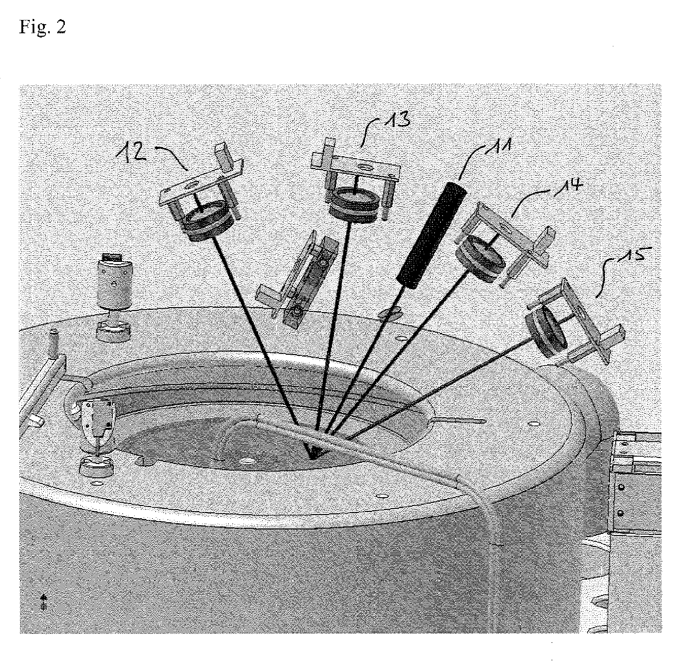

Figure 2 shows in more detail the devices included in arm 1 of the unit shown in Fig. 1. In the embodiment shown in Fig. 2, the arm includes a laser 11 and a detector 12 for detecting 0^{th} order diffracted light. The arm further includes three detectors 13, 14 and 15 for detecting 1^{st} order diffracted light under three different angles to be able to detect light diffracted by master discs having different pitch sizes. Specifically, detector 13 is used for DVDs, detector 14 is used for HD DVDs, and detector 15 is used for Blu-ray Discs.

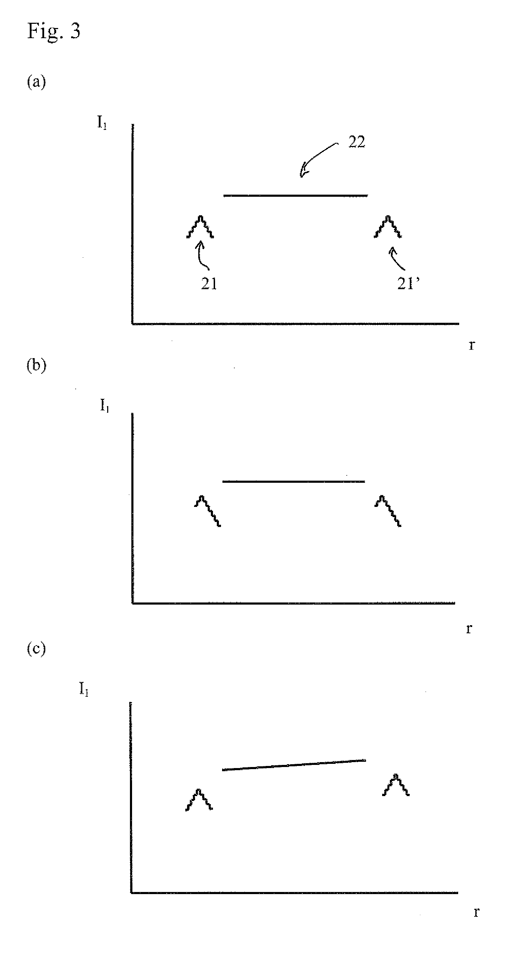

Figure 3 schematically shows diffraction order measurement plots produced by measuring the intensity I₁ of the first order diffracted beam. The measurement of the intensity is done as a function of the distance r from the center of the master disc.

Figure 3(a) schematically illustrates the result achieved with a master disc which has been recorded with the laser beam of the laser beam recorder correctly in focus on the material layer of the master disc. In the area 22 in which information has been recorded on the master disc, the intensity of the first order diffracted beam is substantially constant. Additional focus information has further been recorded in areas on the inside 21 and outside 21' of the disc. In these areas, bands with a predetermined focus offset have been written. These bands have been written in such a way that the intensity measurement results in an predetermined profile of the measured intensity in certain predefined areas as illustrated in Figure 3(a).

Figure 3(b) illustrates the situation where the laser in the laser beam recorder was out of focus during illuminating the master disc. While in the information area 22 only the absolute vary of the intensity is shifted due to the erroneous focussing, which is difficult to determine, the focus information including bands with a predetermined focus offset which are written on the disc in order to control the focus clearly indicate the incorrect focussing in the laser beam recorder. The diffraction order measurement plots as shown in Figure 3(b) may be then used to determine and compensate for any focussing offset error in the laser beam recorder.

If the performance of the laser beam recorder is optimal, that is, the relative intensities in the dedicated bands reflect the correct focussing of the laser beam recorder, diffraction order measurement deviations as schematically shown in Figure 3(c) must be due to a variation introduced by the means for applying the material layer. For example, the situation shown in Figure 3(c) in which the intensity of the first order diffracted beam generally increases with the distance from the center of the master disc, indicates an increase in the thickness of the applied layer. From the diffraction order measurements the means for applying the material layer can be controlled, for example by controlling the rotation speed of a spin-coater or by varying the magnetic field in a sputtering unit.

Other deviations as described above may be detected on the basis of the written focus bands which are then used to optimize the mastering process.

## Claims

1. An integrated mastering system for manufacturing master discs for optical media, comprising:
means for recording information on a master disc comprising
means for applying a material layer to a master disc;
a laser beam recorder for illuminating the material layer in a desired pattern based on the information to be recorded; and
means for developing the material layer;
means for determining the quality of the developed layer based on measurement of a light beam diffracted by the pattern recorded on the master disc; and
means for controlling the process settings of the integrated mastering system on the basis of the determined quality of the master disc.

2. The integrated mastering system according to claim 1, wherein the means for controlling is adapted to control recording settings, for example the focus offset.

3. The integrated mastering system according to claim 1 or 2, wherein the means for controlling is adapted to control the means for applying a material layer and/or the laser beam recorder.

4. The integrated mastering system according to claim 1, 2 or 3, wherein said means for applying a material layer comprises means for spin coating a photoresist layer to the master disc.

5. The integrated mastering system according to claim 1, 2 or 3, wherein said means for applying material layer comprises a sputtering unit.

6. The integrated mastering system according to claim 5, wherein the material layer comprises a dielectric material and wherein the laser beam recorder is adapted to induce a phase transition in the dielectric material by illuminating the dielectric layer with laser pulses in the desired pattern.

7. The integrated mastering system according to any one of the preceding claims, wherein the means for controlling is further adapted to control the means for developing on the basis of the quality of the master disc.

8. A method for manufacturing master discs for optical media, in particular using the integrated mastering system according to any one of the preceding claims, the method comprising the steps of:
recording information on a master disc by
applying a material layer to the master disc;
illuminating the material layer in a desired pattern based on the information to be recorded; and
developing the material layer;
determining the quality of the developed layer by measuring a light beam diffracted by the pattern recorded on the master disc; and
controlling process settings of a subsequent master disc on the basis of the determined quality.

9. The method according to claim 8, wherein the step of controlling process settings comprises controlling recording settings, for example, the focus offset.

10. The method according to claim 8 or 9, wherein the step of controlling recording comprises controlling the step of applying a material layer and/or the step of illuminating the material layer.

11. The method according to claim 8, 9 or 10, wherein a photosensitive layer is applied to the master disc by spin coating.

12. The method according to claim 11, wherein the step of controlling process settings comprises controlling the rotation speed during spin-coating.

13. The method according to claim 8, 9 or 10, wherein the step of applying a material comprises applying a dielectric layer to the master disc and wherein the step of illuminating the material layer comprises inducing phase transition in the dielectric layer in said desired pattern using laser pulses.

14. The method according to claim 13, wherein the step of controlling recording comprises controlling a magnetic field generated between a sputtering cathode and the surface of the master disc to be sputtered.

15. The method according to any one of claims 8 to 14, wherein the step of controlling the recording comprises controlling the focus of a laser beam used to illuminate the material layer.

16. The method according to any one of claims 8 to 15, wherein the step of recording information further comprises illuminating areas of the master disc to be manufactured which are not used for recording information on the master disc to produce a plurality of bands with a predetermined focus offset from one of the bands to another one and wherein the step of measuring the quality comprises the step of measuring the intensity of a light beam diffracted by the bands having a predetermined focus offset.

17. The method according to any one of claims 8 to 16, wherein controlling process settings comprises controlling the amount of material applied to the master disc.

18. The method according to any one of claims 10 to 17, wherein the step of controlling process settings further comprises controlling the step of developing the material layer by controlling the duration of developing the material layer.

19. The method according to any one of claims 8 to 18, wherein the step of measuring the quality includes illuminating an area of the master disc on which information has been recorded and measuring the intensity and/or the position of the 0ₜₕ, 1ₛₜ and/or 2_{nd} order diffracted beam.
